# EUROPÄISCHE PATENTSCHRIFT

(11) **EP 2 477 289 B1**
(45) Veröffentlichungstag und Bekanntmachung des Hinweises auf die Patenterteilung: **15.03.2017**
(21) Anmeldenummer: 11151021.0
(22) Anmeldetag: 14.01.2011
(51) Int. Cl.: H02G 3/04, B29C 47/06, F16L 9/12

(54) **Kabelführungsrohr**
Cable conduit
Gaine de guidage de câble

(43) Veröffentlichungstag der Anmeldung: 18.07.2012
(73) Patentinhaber: Dipl.-Ing. Dr. Ernst Vogelsang GmbH & Co. KG, D-45699 Herten (DE)
(72) Erfinder: Vogelsang, Horst, 45699 Herten (DE)
(74) Vertreter: Nunnenkamp, Jörg

(56) Entgegenhaltungen:
- EP-A1- 0 775 862
- WO-A2-2004/039574
- US-A- 5 324 557
- US-B1- 6 176 269

## Beschreibung

Die Erfindung betrifft die Verwendung eines Kabelschutzrohres aus einem thermoplastischen Kunststoff zur Aufnahme von Telekommunikationskabeln, insbesondere Glasfaserkabeln wobei das Kabelschutzrohr mit einem von einer Kanalwand mit kreisförmigem Querschnitt umschlossenen Kabelführungskanal mit einer Kanalinnenwand und einer Kanalaußenwand ausgerüstet ist, wobei ferner die Kanalwand einen wenigstens dreischichtigen Aufbau aus einer geschäumten Zwischenschicht und der Kanalinnenwand und Kanalaußenwand aufweist, sowie die Kanalinnenwand und/oder Kanalaußenwand glattflächig ausgebildet ist, und wobei in die geschäumte Zwischenschicht wenigstens eine axial im Vergleich zum Kabelführungskanal verlaufende Stabilisierungsschicht eingebracht ist.

Kabelführungsrohre dienen dazu, im Innern befindliche Elektrokabel, Telekommunikationskabel etc. beispielsweise unter der Erde, in einer Baugrube usw. zu führen und für eine einwandfreie Verlegung zu sorgen. Dabei können Kabelführungsrohre prinzipiell jegliche Gestalt annehmen, sind meistens jedoch als zylindrische Rohre ausgebildet, wobei der Mantel der Rohre prinzipiell auch Öffnungen aufweisen kann. Demgegenüber verfügen Kabelschutzrohre als spezielle Kabelführungsrohre regelmäßig über einen geschlossenen Mantel, um einen einwandfreien Schutz der im Innern aufgenommenen Kabel zu gewährleisten.

Ein Kabelführungsrohr wird beispielsweise in der EP 1 091 463 A1 der Anmelderin beschrieben. Derartige Kabelführungsrohre kommen zum Einsatz, um überwiegend Telekommunikationskabel und hier insbesondere Glasfaserkabel im Zuge ihrer Erdverlegung zu schützen. Die fraglichen Telekommunikationskabel werden typischerweise unter Einsatz von Pressluft in die fraglichen Kabelführungsrohre eingezogen. Dabei wird oftmals mit einem Innendruck innerhalb der Kabelführungsrohre von mehr als 10 bar (mehr als 1 MPa) gearbeitet.

D.h., Kabelführungsrohre bzw. Kabelschutzrohre müssen einerseits druckdicht ausgelegt sein und andererseits an ihrer Kanalinnenwand eine geringe Reibung aufweisen. Zu diesem Zweck ist die Kanalinnenwand bei der gattungsbildenden Lehre entsprechend der EP 1 091 463 A1 mit Gleitrippen für die einzuziehenden Telekommunikationskabel ausgebildet. Mit Hilfe dieser Gleitrippen wird die Reibung zwischen der Kanalinnenwand und dem jeweils einzuziehenden Telekommunikationskabel verringert. Das hat sich bewährt.

Bei einem Kabelführungsrohr entsprechend der Gattung, wie es in der US 6 176 269 B1 beschrieben wird, ist die dortige Stabilisierungsschicht S-förmig im Querschnitt gestaltet. Zugehörige Rippen sind aus dünnen Plastikmaterial hergestellt und können entweder axial oder radial verlaufen. Ein Freiraum zwischen den Rippen kann leer oder mit Schaum gefüllt werden. Dadurch sind bei dem bekannten Kabelführungsrohr Stabilitätseinbußen zu befürchten.

Die bekannten Kabelführungsrohre sind im Hinblick auf die Herstellungskosten und ihr Gewicht verbesserungsbedürftig. Tatsächlich arbeitet der Stand der Technik an dieser Stelle bisher praktisch ausschließlich mit massiven Kabelführungsrohren aus dem thermoplastischen Kunststoff. Daraus resultiert ein nicht unerhebliches spezifisches Gewicht des jeweiligen Kabelführungsrohres mit entsprechenden Kosten für seine Herstellung. Hier will die Erfindung insgesamt Abhilfe schaffen.

Der Erfindung liegt das technische Problem zugrunde, die Verwendung eines Kabelschutzrohres des eingangs beschriebenen Aufbaues so weiter zu entwickeln, dass die Stabilität verbessert ist und Gewicht sowie Herstellungskosten verringert sind.

Zur Lösung dieser technischen Problemstellung ist Gegenstand der Erfindung die Verwendung eines Kabelschutzrohres aus einem thermoplastischen Kunststoff zur Aufnahme von Telekommunikationskabeln und insbesondere Glasfaserkabeln nach Anspruch 1.

Der Begriff glattflächig für die Kanalinnenwand bzw. Kanalaußenwand beschreibt eine Oberflächenqualität mit typischerweise einer Rauheit von weniger als 1 mm (1000 µm), typischerweise sogar von weniger als 500 µm und ganz bevorzugt von weniger als 200 µm. Dabei bezeichnet die Rauheit jeweils die maximale Rauheitsprofilhöhe. Hiervon ausgenommen sind natürlich etwaige Gleitrippen, die ungeachtet der ansonsten glattflächigen Auslegung der Kanalinnenwand bzw. der Kanalaußenwand an einer oder an beiden Kanalwänden realisiert werden können.

Im Rahmen der Erfindung verfügt die Kanalwand über einen wenigstens dreischichtigen Aufbau. Dabei wird bei einer bevorzugten Variante die geschäumte Zwischenschicht zwischen einerseits der glattflächigen Kanalinnenwand und andererseits der glattflächigen Kanalaußenwand aufgenommen. Hierbei handelt es sich um die bevorzugte Variante, weil die betreffenden Kabelführungsrohre sowohl auf der Kanalaußenwand als auch auf der Kanalinnenwand geringe Reibungswerte aufweisen (müssen), um einerseits den Einzug der Telekommunikationskabel zu erleichtern und andererseits den Einbau und die Verlegung in einer Baugrube.

Jedenfalls verfügen die Kanalinnenwand und/oder die Kanalaußenwand über eine glattflächige Oberfläche, wohingegen die geschäumte Zwischenschicht geschlossenzellig ausgebildet ist. Dabei liegt der Durchmesser der einzelnen Zellen der geschäumten Zwischenschicht erfindungsgemäß im Submillimeterbereich, ist also im Bereich < 1 mm angesiedelt.

Die Kanalinnenwand und die Kanalaußenwand sowie die geschäumte Zwischenschicht sind erfindungsgemäß aus einem übereinstimmenden thermoplastischen Kunststoff hergestellt. Aus Gründen einer einfachen Fertigung und um übereinstimmende physikalische Eigenschaften zur Verfügung zu stellen, wird mit einem übereinstimmenden Kunststoff einerseits zur Herstellung der geschäumten Zwischenschicht und andererseits zur Herstellung der Kanalinnenwand bzw. Kanalaußenwand gearbeitet. Dabei wird erfindungsgemäß auf Kunststoffe wie Polyethylen (PE) oder auch Polypropylen (PP) zurückgegriffen. Tatsächlich lassen sich Kabelführungsrohre aus derartigen Kunststoffen einfach herstellen und sind besonders biegsam, können also auf Rollen bevorratet werden. Die jeweils maximale Gebrauchstemperatur von typischerweise 80 °C und mehr reicht für die sämtlichen Anwendungsfälle aus. Außerdem sind Polyethylen und Polypropylen beständig gegenüber Öl und zum Teil auch gegenüber Säuren, so dass keine Probleme bei der Verarbeitung und Verlegung zu befürchten sind. Hinzu kommt, dass die fraglichen Kunststoffe bzw. daraus hergestellte Kabelführungsrohre kostengünstig produziert werden können.

Darüber hinaus hat sich gezeigt, dass die geschäumte Zwischenschicht im Regelfall ein Raumgewicht aufweist, welches ca. 20%, vorzugsweise ca. 30%, unterhalb der Materialdichte der Kanalinnenwand bzw. Kanalaußenwand angesiedelt ist. D.h., die geschäumte Zwischenschicht weist ein Raumgewicht auf, welches um ca. 20%, vorzugsweise sogar um ca. 30%, unterhalb der Materialdichte von massivem Polyethylen respektive Polypropylen im Beispielfall liegt. Auf diese Weise kann auch das erfindungsgemäß hergestellte Kabelführungsrohr mit einem deutlich geringeren Gewicht als bisherige Ausgestaltungen hergestellt werden. Tatsächlich ist eine Gewichtseinsparung von mindestens 20% möglich.

Als Folge hiervon sind nicht nur die Herstellungskosten reduziert, sondern auch die Transportkosten zu einer Baustelle. Dennoch verfügt das erfindungsgemäße Kabelführungsrohr über praktisch die gleichen Eigenschaften wie ein Kabelführungsrohr mit massiv ausgelegter Kanalwand. Das gilt insbesondere für physikalische Eigenschaften wie die maximale Dehnung, Härte, Temperaturausdehnung, Temperaturbeständigkeit etc.. Dieser Umstand lässt sich im Wesentlichen darauf zurückführen, dass sowohl die Kanalinnenwand als auch die Kanalaußenwand vergleichbar glattflächig ausgelegt sind, wie bei einem massiven Kabelführungsrohr. Außerdem verfügen die Kanalinnenwand bzw. die Kanalaußenwand über eine Materialstärke, die im Bereich von regelmäßig 1 bis 10 mm und vorzugsweise 1 bis 5 mm angesiedelt ist.

Demgegenüber verfügt die geschäumte Zwischenschicht typischerweise über eine Schichtdicke von wenigstens 10 mm, meistens sogar von mehr als 20 mm. Auf diese Weise und infolge des realisierten Sandwich-Aufbaus werden seitens des erfindungsgemäßen Kabelführungsrohres vergleichbare mechanische Eigenschaften wie bei einem Kabelführungsrohr mit massivem Wandaufbau beobachtet. Hinzu kommt, dass das erfindungsgemäße Kabelführungsrohr genauso dicht gegenüber einem Überdruck im Innern ausgebildet ist, wie dies für ein massives Kabelführungsrohr gilt. Tatsächlich lassen sich mit dem erfindungsgemäßen Kabelführungsrohr problemlos Innenüberdrücke von mehr als 10 bar (mehr als 1 MPa) beherrschen und realisieren.

Bei der Herstellung der geschäumten Zwischenschicht wird im Allgemeinen auf einen physikalischen und/oder chemischen Schäumvorgang zurückgegriffen. Ein physikalischer Schäumvorgang ist dadurch gekennzeichnet, dass das Kunststoffmaterial durch einen physikalischen Vorgang geschäumt wird, indem beispielsweise zusätzlich Luft oder ein anderes Gas in einen typischerweise eingesetzten Schaumextruder eingeblasen wird. Im Rahmen der Erfindung und nach vorteilhafter Ausgestaltung wird mit einem chemischen Schäumungsvorgang gearbeitet. In diesem Fall wird dem Kunststoffgranulat als Ausgangsmaterial für das herzustellende Kabelführungsrohr bzw. die geschäumte Zwischenschicht ein Treibmittel zugesetzt. Dieses Treibmittel liegt meistens in Form sogenannter Masterbatch-Granulate vor. Beim Extrusionsvorgang und durch Wärmezufuhr spaltet sich nun ein flüchtiger Bestandteil des Treibmittels ab. Daraus resultiert ein Aufschäumen der Schmelze und steht ausgangsseitig des Schaumextruders die gewünschte geschäumte Zwischenschicht zur Verfügung.

Die Größenverhältnisse im Innern der Kanalwand sind so ausgelegt, dass die geschäumte Zwischenschicht typischerweise eine Materialstärke aufweist, welche ca. 60% bis 98% und vorzugsweise ca. 80% bis ca. 95% der gesamten Materialstärke der Kanalwand beträgt. Auf diese Weise lässt sich das Gewicht des erfindungsgemäßen Kabelführungsrohres deutlich verringern. Denn die geschäumte Zwischenschicht nimmt weit mehr als die Hälfte der Wandstärke bzw. Materialstärke der Kanalwand ein. Da die geschäumte Zwischenschicht mit einem Raumgewicht ausgerüstet ist, welches wenigstens um 20% unterhalb der Materialdichte des zugehörigen Vollmaterials angesiedelt ist, sind das Gewicht, die Herstellungskosten und die Transportkosten ebenfalls um einen vergleichbaren Betrag gegenüber bisherigen Ausführungsformen verringert.

Von weiterer erfindungswesentlicher Bedeutung ist die Tatsache, dass die geschäumte Zwischenschicht mit der einen oder mehreren Stabilisierungsschichten ausgerüstet ist. Die eine oder die mehreren Stabilisierungsschichtensind in die geschäumte Zwischenschicht eingebracht. Bei der jeweiligen Stabilisierungsschicht mag es sich um eine oder mehrere Kunststofffolien handeln. Die Kunststofffolie ist aus dem gleichen Kunststoffmaterial gefertigt wie die geschäumte Zwischenschicht.

Dabei hat es sich aus Gründen der Stabilitätsverbesserung des erfindungsgemäßen Kabelführungsrohres besonders bewährt, dass die Stabilisierungsschicht axial verlaufend im Vergleich zum Kabelführungskanal angeordnet ist. Bei dem axialen Verlauf der Stabilisierungsschicht wird so vorgegangen, dass die Stabilisierungsschicht in etwa mittig in die geschäumte Zwischenschicht eingebettet ist. Folgerichtig verfügt die Stabilisierungsschicht über eine ähnliche Raumgestalt wie die geschäumte Zwischenschicht.

Weil das erfindungsgemäße Kabelführungsrohr überwiegend im Querschnitt kreisförmig ausgebildet ist, sind erfindungsgemäß die Kanalinnenwand, die Kanalaußenwand und die dazwischen befindliche geschäumte Zwischenschicht jeweils konzentrisch im Vergleich zu einem gemeinsamen Mittelpunkt im Querschnitt angeordnet. Auch die zusätzliche und axial im Vergleich zum Kabelführungsrohr verlaufende Stabilisierungsschicht ist im Querschnitt konzentrisch im Vergleich zu diesem gemeinsamen Mittelpunkt platziert. Durch den fraglichen Mittelpunkt geht im Allgemeinen eine Längsachse des Kabelführungsrohres bzw. Kabelschutzrohres. Jedenfalls sorgt die eine oder sorgen die mehreren Stabilisierungsschichten dafür, dass das Kabelführungsrohr bzw. Kabelschutzrohr bei axialen und/oder radialen Belastungen eine zusätzliche Stabilisierung erfährt.

Die geschäumte Zwischenschicht und die Kanalinnenwand und/oder die Kanalaußenwand sind regelmäßig aus einem gleichen thermoplastischen Kunststoff hergestellt. Hierbei mag es sich um Polyethylen (PE), Polypropylen (PP) etc. handeln, wie einleitend bereits erläutert worden ist. Außerdem wird die geschäumte Zwischenschicht durch ein dem Kunststoffgranulat zugesetztes Treibmittel im Sinne eines chemischen Schäumvorganges produziert. Hierin sind die wesentlichen Vorteile zu sehen.

Im Folgenden wird die Erfindung anhand einer lediglich ein Ausführungsbeispiel darstellenden Zeichnung näher erläutert; es zeigen:
- Fig. 1: ausschnittsweise ein Kabelführungsrohr in perspektivischer Darstellung,
- Fig. 2: einen Querschnitt durch den Gegenstand nach Fig. 1 im Rahmen der erfindungsgemäß verfolgten Variante,
- Fig. 3: einen Querschnitt durch den Gegenstand nach Fig. 1 bei einer alternativen und nicht zur Erfindung gehörigen Ausgestaltung und
- Fig. 4: eine Extrudervorrichtung schematisch zur Herstellung des Kabelführungsrohres nach den Fig. 1 bis 3.

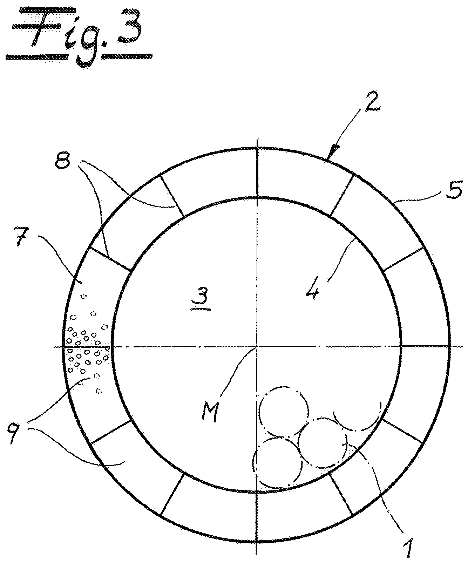

In den Figuren ist ein Kabelführungsrohr aus einem thermoplastischem Kunststoff dargestellt. Das Kabelführungsrohr dient zur Aufnahme von lediglich in Fig. 3 angedeuteten Telekommunikationskabeln 1. Tatsächlich handelt es sich um ein Kabelschutzrohr zur Aufnahme von Glasfaserkabeln 1.

Dabei ist ein von einer Kanalwand 2 umschlossener Kabelführungskanal 3 vorgesehen. Der Kabelführungskanal 3 verfügt über eine Kanalinnenwand 4 und eine Kanalaußenwand 5. Die Kanalwand 2 weist im Ausführungsbeispiel einen kreisförmigen Querschnitt auf bzw. ist als Kreisring ausgelegt, kann grundsätzlich aber auch andere Querschnittsformen, wie beispielsweise einen elliptischen Querschnitt oder dergleichen, besitzen. Im Ausführungsbeispiel erstreckt sich der im Querschnitt kreisförmige Kabelführungskanal 3 entlang einer Längsachse L, die durch einen Mittelpunkt M der kreisförmigen Kanalwand 2 hindurchgeht.

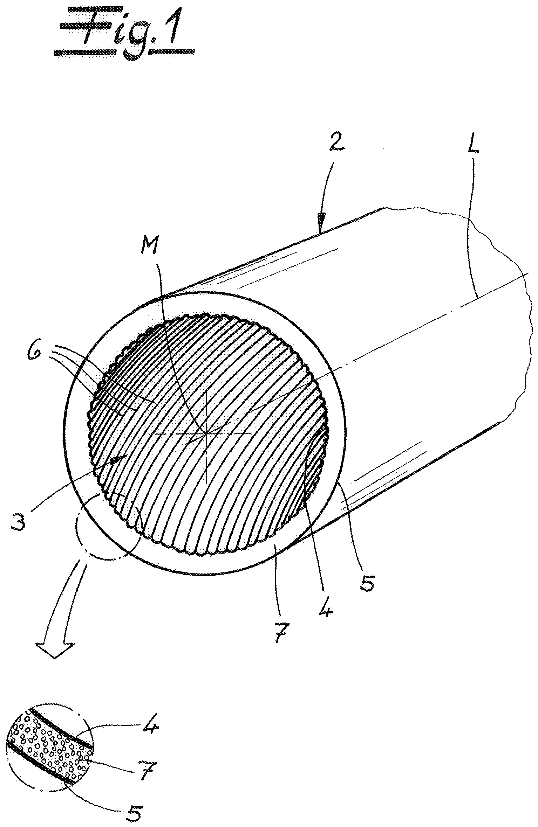

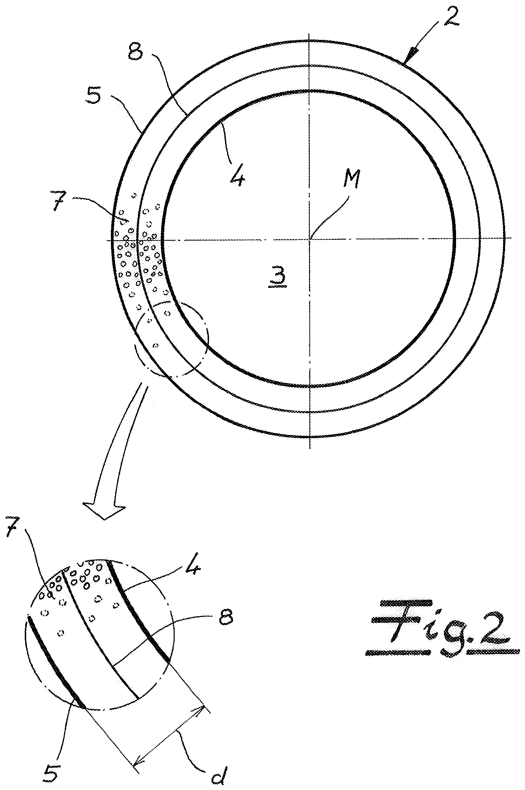

Die Kanalinnenwand 4 ist im Ausführungsbeispiel nach der Fig. 1 mit zueinander parallel verlaufenden Gleitrippen 6 ausgerüstet, welche in Bezug auf die Längsachse L alternierende Richtungen aufweisen. Insofern mögen die Gleitrippen 6 eine ähnliche topologische Anordnung an der Kanalinnenwand 4 aufweisen, wie dies in der EP 1 091 463 A1 der Anmelderin beschrieben wird. Bei den Ausführungsbeispielen nach den Fig. 2 und 3 sind keine Gleitrippen 6 an dieser Stelle vorgesehen, können gleichwohl aber bei Bedarf verwirklicht werden.

Von besonderer erfinderischer Bedeutung ist nun der Umstand, dass die Kanalwand 2 über einen zumindest dreischichtigen Aufbau verfügt. Das ist im Ausführungsbeispiel nach der Fig. 2 dargestellt. D.h., die geschäumte Zwischenschicht 7 wird zwischen der glattflächigen Kanalinnenwand 4 und der ebenfalls glattflächigen Kanalaußenwand 5 eingeschlossen.

Dabei sind die Kanalinnenwand 4 und die Kanalaußenwand 5 sowie die geschäumte Zwischenschicht 7 im dargestellten Beispielfall aus einem übereinstimmenden thermoplastischen Kunststoff hergestellt. Hierbei handelt es sich um PE oder PP. Außerdem ist die geschäumte Zwischenschicht 7 geschlossenzellig ausgebildet. Dabei verfügen die einzelnen Zellen der geschäumten Zwischenschicht 7 über einen Durchmesser im Submillimeterbereich.

Auf diese Weise kann die geschäumte Zwischenschicht 7 mit einem Raumgewicht ausgerüstet werden, welches ca. 20%, vorzugsweise ca. 30%, unterhalb der Materialdichte der Kanalinnenwand 4 bzw. der Kanalaußenwand 5 angesiedelt ist. Berücksichtigt man beispielsweise eine Materialdichte für Polyethylen (PE), die im Bereich von ca. 0,9 g/cm³ angesiedelt ist (PE-LD), so verfügt die geschäumte Zwischenschicht aus dem übereinstimmenden thermoplastischen Material (PE-LD) über ein Raumgewicht von ca. 0,7 g/cm³ oder sogar noch weniger. Daraus resultiert ein verringertes Gewicht des Kabelführungsrohres im Ganzen und ergeben sich hieraus reduzierte Herstellungs- und Transportkosten.

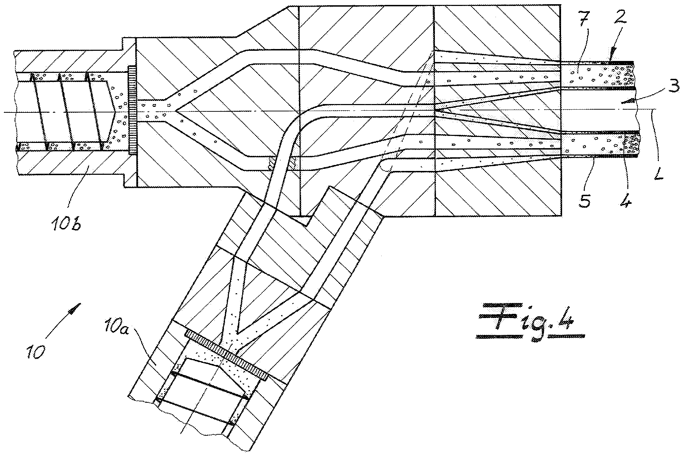

Die geschäumte Zwischenschicht 7 kann durch einen physikalischen und/oder chemischen Schäumungsvorgang hergestellt werden. Im Rahmen des Ausführungsbeispiels wird mit einem chemischen Schäumungsvorgang gearbeitet, indem dem Kunststoffgranulat (aus PE) zur Herstellung der geschäumten Zwischenschicht 7 ein Treibmittel ebenfalls in Granulatform zugegeben wird. Durch die beim Extrusionsvorgang in der Düse vorherrschenden Temperaturen wird das Treibmittel freigesetzt und sorgt für das gewünschte Aufschäumen. Das wird mit Bezug zu der Fig. 4 noch näher erläutert werden.

Die geschäumte Zwischenschicht 7 verfügt über eine Materialstärke, welche ca. 60% bis 98% der gesamten Materialstärke bzw. einer Dicke d der Kanalwand 2 beträgt. Das wird anhand der vergrößerten Darstellung in Fig. 2 deutlich, welche die Kanalwand 2 im Querschnitt zeigt. Danach nehmen die glattflächige Kanalinnenwand 4 sowie die glattflächige Kanalaußenwand 5 von der Materialstärke bzw. der Dicke d der Kanalwand 2 ca. 2% bis 5% ein, wohingegen die geschäumte Zwischenschicht 95% bis 98% der Dicke d der Kanalwand 2 ausfüllt.

Anhand der Fig. 2 und 3 erkennt man darüber hinaus, dass die geschäumte Zwischenschicht 7 mit einer oder mehreren Stabilisierungsschichten 8 ausgerüstet ist. Im Rahmen des gezeigten Beispielfalls nach der Erfindung und entsprechend der Fig. 2 ist eine Stabilisierungsschicht 8 vorgesehen, die mittig im Vergleich zu der geschäumten Zwischenschicht 7 angeordnet ist und in Längsrichtung bzw. entlang der Längsachse L verläuft. Bei der Stabilisierungsschicht 8 handelt es sich um eine oder mehrere Folienschichten.

Man erkennt, dass die Stabilisierungsschicht 8 kreisförmig ausgebildet ist und im Vergleich zu der Kanalinnenwand 4 sowie der Kanalaußenwand 5 konzentrisch zum gemeinsamen Mittelpunkt M ausgestaltet ist. D.h., die Stabilisierungsschicht 8 verläuft axial in Richtung der Längserstreckung bzw. entlang der Längsachse L des Kabelführungsrohres bzw. Kabelschutzrohres und ist wie die Kanalinnenwand 4 und die Kanalaußenwand 5 insgesamt rohrförmig ausgelegt.

Demgegenüber zeigt die Fig. 3 eine nicht zur Erfindung gehörende Variante, bei welcher die Stabilisierungsschicht 8 bzw. die mehreren Stabilisierungsschichten 8 jeweils radial verlaufend im Vergleich zum Kabelführungskanal 3 angeordnet sind. D.h., die einzelnen Stabilisierungsschichten 8 verfügen über eine radiale Anordnung im Vergleich zum Mittelpunkt M. Auf diese Weise sorgen die einzelnen Stabilisierungsschichten 8 dafür, dass die geschäumte Zwischenschicht 7 in einzelne Ringsegmente 9 unterteilt wird. In jedem Fall sorgt die eine bzw. sorgen die mehreren Stabilisierungsschichten 8 dafür, dass die geschäumte Zwischenschicht 7 bei etwaigen axialen und/oder radialen Belastungen des Kabelführungsrohres eine ergänzende Stabilisierung erfährt.

Bei der Herstellung des erfindungsgemäßen Kabelführungsrohres wird auf eine Extrusionsvorrichtung 10 zurückgegriffen, die schematisch in der Fig. 4 dargestellt ist. Die Extrusionsvorrichtung 10 setzt sich grundsätzlich aus einem oder mehreren Wandextrudern 10a und einem Schaumextruder 10b zusammen. Mit Hilfe des Wandextruders 10a im Beispielfall nach Fig. 4 werden sowohl die glattflächige Kanalinnenwand 4 als auch die glattflächige Kanalaußenwand 5 hergestellt.

Dabei werden die glattflächige Kanalinnenwand 4 und die glattflächige Kanalaußenwand 5 mit der geschäumten Zwischenschicht 7 jeweils beschichtet. Die geschäumte Zwischenschicht 7 verlässt den Schaumextruder 10b, so dass ausgangsseitig das Kabelführungsrohr mit dem beschriebenen dreischichtigen Aufbau zur Verfügung steht. Man erkennt, dass der Schaumextruder 10b und der Wandextruder 10a bzw. deren Austrittsdüsen oder Auslassdüsen jeweils konzentrisch im Vergleich zu der Längsachse L des Kabelführungsrohres angeordnet sind. Auf diese Weise verlassen die einzelnen Materialbahnen die fraglichen Extruder 10a, 10b in der gewünschten konzentrischen Ausrichtung zueinander.

Auf diese Weise wird die den Schaumextruder 10b verlassende geschäumte Zwischenschicht 7 zwischen der jeweils glattflächigen Kanalinnenwand 4 und der glattflächigen Kanalaußenwand 5 eingeschlossen. Wie zuvor bereits erläutert, ist dem angedeuteten Granulat zur Herstellung der geschäumten Zwischenschicht 7 ein Treibmittel ebenfalls in Granulatform zugesetzt. Dieses Treibmittel in Granulatform expandiert beim Passieren der Düse, so dass die geschäumte Zwischenschicht 7 wie gewünscht entsteht. - Grundsätzlich kann die Herstellung des Kabelführungsrohres auch so bewerkstelligt werden, wie dies in der DE 1 704 713 beschrieben wird, die sich allerdings mit Rohren für die thermische Isolierung befasst.

## Patentansprüche

1. Verwendung eines Kabelschutzrohres aus einem thermoplastischen Kunststoff zur Aufnahme von Telekommunikationskabeln (1); insbesondere von Glasfaserkabeln (1), wobei
- das Kabelschutzrohr mit einem von einer Kanalwand (2) mit kreisförmigem Querschnitt umschlossenen Kabelführungskanal (3) mit einer Kanalinnenwand (4) und einer Kanalaußenwand (5) ausgebildet ist, wobei
- die Kanalwand (2) einen wenigstens dreischichtigen Aufbau aus einer geschäumten Zwischenschicht (7) und der Kanalinnenwand (4) und Kanalaußenwand (5) aufweist sowie
- die Kanalinnenwand (4) und/oder Kanalaußenwand (5) glattflächig ausgebildet ist, wobei ferner
- in die geschäumte Zwischenschicht (7) wenigstens eine axial im Vergleich zum Kabelführungskanal (3) verlaufende Stabilisierungsschicht (8) eingebracht ist und
- die Kanalinnenwand (4) und die Kanalaußenwand (5) sowie die geschäumte Zwischenschicht (7) aus einem übereinstimmenden thermoplastischen Kunststoff in Gestalt von PE oder PP hergestellt sind, wobei weiter
- die Stabilisierungsschicht (8) im Querschnitt kreisförmig als eine oder mehrere Folienschichten ausgebildet ist und
- im Vergleich zu der Kanalinnenwand (4) sowie der Kanalaußenwand (5) konzentrisch zum gemeinsamen Mittelpunkt (M) sowie mittig im Vergleich zu der geschäumten Zwischenschicht (7) angeordnet und rohrförmig ausgestaltet ist, und wobei
- die geschäumte Zwischenschicht (7) geschlossenzellig ausgebildet ist und die einzelnen Zellen der geschäumten Zwischenschicht (7) einen Durchmesser im Submillimeterbereich aufweisen.

2. Verwendung nach Anspruch 1, **dadurch gekennzeichnet, dass** die geschäumte Zwischenschicht (7) ein Raumgewicht aufweist, welches ca. 20%, vorzugsweise ca. 30%, unterhalb der Materialdichte der Kanalinnenwand (4) bzw. Kanalaußenwand (5) angesiedelt ist.

3. Verwendung nach Anspruch 1 oder 2, **dadurch gekennzeichnet, dass** die geschäumte Zwischenschicht (7) durch einen physikalischen und/oder chemischen Schäumungsvorgang hergestellt ist.

4. Verwendung nach einem der Ansprüche 1 bis 3, **dadurch gekennzeichnet, dass** die geschäumte Zwischenschicht (7) eine Materialstärke aufweist, welche ca. 80% bis 98% der Dicke (d) der Kanalwand (2) beträgt.

5. Verwendung nach einem der Ansprüche 1 bis 4, **dadurch gekennzeichnet, dass** in die geschäumte Zwischenschicht (7) mehrere Stabilisierungsschichten (8) eingebracht sind.

6. Verwendung nach einem der Ansprüche 1 bis 5, **dadurch gekennzeichnet, dass** die geschäumte Zwischenschicht (7) durch einen chemischen Schäumvorgang mit Hilfe eines dem Kunststoffgranulat zugesetzten Treibmittels produziert ist.

## Claims

1. A use of a cable conduit consisting of a thermoplastic for accommodating telecommunications cables (1), in particular fibre optic cables (1), wherein
- the cable conduit is formed with a cable guide duct (3), which is enclosed by a duct wall (2) with a circular cross-section and has a duct inner wall (4) and a duct outer wall (5), wherein
- the duct wall (2) has an at least three-layered structure consisting of a foamed intermediate layer (7) and the duct inner wall (4) and duct outer wall (5), and
- the duct inner wall (4) and/or duct outer wall (5) are formed with a smooth surface, wherein furthermore
- at least one stabilisation layer (8), which runs axially in comparison with the cable guide duct (3), is introduced into the foamed intermediate layer (7), and
- the duct inner wall (4) and the duct outer wall (5) and the foamed intermediate layer (7) are produced from a matching thermoplastic in the form of PE or PP, wherein furthermore
- the stabilisation layer (8) is in the form of one or more film layers and has a circular cross-section, and
- is tubular and arranged concentrically to the common centre point (M) in comparison with the duct inner wall (4) and the duct outer wall (5) and centrally in comparison with the foamed intermediate layer (7), and wherein
- the foamed intermediate layer (7) has closed cells, and the individual cells of the foamed intermediate layer (7) have a diameter in the sub-millimetre range.

2. The use according to Claim 1,
**characterised in that**
the foamed intermediate layer (7) has a weight per unit volume that is approx. 20%, preferably approx. 30%, below the material density of the duct inner wall (4) and duct outer wall (5).

3. The use according to Claim 1 or 2,
**characterised in that**
the foamed intermediate layer (7) is produced by a physical and/or chemical foaming process.

4. The use according to any one of Claims 1 to 3,
**characterised in that**
the foamed intermediate layer (7) has a material thickness that is approx. 80% to 98% of the thickness (d) of the duct wall (2).

5. The use according to any one of Claims 1 to 4,
**characterised in that**
a plurality of stabilisation layers (8) is introduced into the foamed intermediate layer (7).

6. The use according to any one of Claims 1 to 5,
**characterised in that**
the foamed intermediate layer (7) is produced by a chemical foaming process with the aid of a blowing agent that is added to the plastic granules.

## Revendications

1. Utilisation d'un tube de protection pour câbles composé d'une matière synthétique thermoplastique pour loger des câbles de télécommunication (1), notamment des câbles en fibre de verre (1),
- le tube de protection pour câbles étant constitué d'un conduit de câblage (3) entouré d'une paroi de conduit (2) avec une section circulaire avec une paroi intérieure de conduit (4) et d'une paroi extérieure de conduit (5),
- la paroi de conduit (2)comportant une structure d'au moins trois couches composée d'une couche intermédiaire en mousse (7) et de la paroi intérieure de conduit (4) et de la paroi extérieure de conduit (5),
- la paroi intérieure de conduit (4) et/ou la paroi extérieure de conduit (5) étant constituée d'une surface lisse, par ailleurs
- au moins une couche de stabilisation (8) passant de manière axiale en comparaison du conduit de câblage (3) étant incorporée dans la couche intermédiaire en mousse (7), et
- la paroi intérieure de conduit (4) et la paroi extérieure de conduit (5) ainsi que la couche intermédiaire en mousse (7) étant fabriquées à partir d'une matière synthétique thermoplastique correspondante sous forme de polyéthylène (PE) ou de polypropylène (PP),
- la couche de stabilisation (8) étant par ailleurs constituée en section de façon circulaire comme une ou plusieurs couches de feuilles et
- étant disposée en comparaison de la paroi intérieure de conduit (4) ainsi que de la paroi extérieure de conduit (5) de façon concentrique par rapport au centre commun (M) ainsi que de façon centrale en comparaison de la couche intermédiaire en mousse (7) et étant constituée de forme tubulaire, et
- la couche intermédiaire en mousse (7) étant constituée à cellules fermées et les cellules individuelles de la couche intermédiaire en mousse (7) comportant un diamètre dans une gamme inférieur au millimètre.

2. Utilisation selon la revendication 1, **caractérisée en ce que** la couche intermédiaire en mousse (7) comporte un poids spécifique qui est situé env. 20%, de préférence env. 30%, en dessous de la densité matérielle de la paroi intérieure de conduit (4) ou de la paroi extérieure de conduit (5).

3. Utilisation selon la revendication 1 ou 2, **caractérisée en ce que** la couche intermédiaire en mousse (7) est fabriquée par un procédé de moussage physique et/ou chimique.

4. Utilisation selon l'une quelconque des revendications 1 à 3, **caractérisée en ce que** la couche intermédiaire en mousse (7) comporte une épaisseur de matériau qui est env. 80% à 98% de l'épaisseur (d) de la paroi du conduit (2).

5. Utilisation selon l'une quelconque des revendications 1 à 4, **caractérisée en ce que** plusieurs couches de stabilisation (8) sont incorporées dans la couche intermédiaire en mousse (7).

6. Utilisation selon l'une quelconque des revendications 1 à 5, **caractérisée en ce que** la couche intermédiaire en mousse (7) est produite par un procédé de moussage à l'aide d'un agent moussant ajouté au granulat de matière synthétique.
